# EUROPÄISCHE PATENTSCHRIFT

(11) **EP 2 640 589 B1**
(45) Veröffentlichungstag und Bekanntmachung des Hinweises auf die Patenterteilung: **24.02.2016**
(21) Anmeldenummer: 11785402.6
(22) Anmeldetag: 17.11.2011
(51) Int. Cl.: B60K 11/02, B60L 11/02, H02J 7/14, H02K 7/18, B60K 6/40, B60K 6/405, B60K 6/46, F02B 63/04, F01P 3/00

(54) **STROMERZEUGUNGSAGGREGAT**
CURRENT GENERATING UNIT
GROUPE DE PRODUCTION DE COURANT

(30) Priorität: 18.11.2010 AT 19102010
(43) Veröffentlichungstag der Anmeldung: 25.09.2013
(73) Patentinhaber: AVL List GmbH, 8020 Graz (AT)
(72) Erfinder: STEINBAUER, Michael, 8524 BAD GAMS (AT); FUCKAR, Gernot, A-8046 Graz (AT); BERGER, Robert, A-8192 Strallegg (AT); NIMMERVOLL, Andreas, A-8972 Ramsau (AT); BREGANT, Aldo, A-8042 Graz (AT)
(74) Vertreter: Babeluk, Michael
(86) Internationale Anmeldenummer: PCT/EP2011/070333
(87) Internationale Veröffentlichungsnummer: WO 2012/066067

(56) Entgegenhaltungen:
- EP-A2- 1 323 906
- AT-A2- 505 950
- JP-A- 2001 132 564
- US-A- 5 121 715

## Beschreibung

Die Erfindung betrifft ein Stromerzeugungsaggregat, zur Reichweitenausdehnung eines Elektrofahrzeuges, gemäß Anspruch 1.

Die AT 505 950 B1 beschreibt ein Stromerzeugungsaggregat zur Reichweitenerweiterung eines Elektrofahrzeuges, mit einer Kreiskolbenbrennkraftmaschine und einem Generator, welcher achsgleich zur Abtriebswelle der Brennkraftmaschine angeordnet ist. Die Brennkraftmaschine und der Generator sind als Einheit ausgebildet und weisen ein gemeinsames Kühlsystem auf. Das Kühlwasser gelangt dabei aus einer Kühlmittelpumpe in Wasserräume des Generators und der Brennkraftmaschine und wird danach den Luft/Wasser- Wärmetauschern zugeführt. Die Kühlkanäle des Generators und der Brennkraftmaschine sind dabei ohne separate Leitungen direkt miteinander strömungsverbunden.

Des weiteren ist aus der DE 3 601 193 A1 ein Aggregat aus Stromgenerator und Verbrennungsmotor bekannt, wobei der Verbrennungsmotor und der Generator einen gemeinsamen Kühlwasserkreislauf besitzen, wobei die vom Generator kommende, die Generatorwärme abführende Leitung mit dem Kühlwassereinlass des Motors verbunden ist.

Die DE 4 020 416 A1 beschreibt einen Generator mit Ankerwellenkühlung, wobei der Generator und ein durch einen Verbrennungsmotor gebildeter Antriebsmotor ein gemeinsames Kühlsystems aufweisen.

Die WO 02/052132 A1 beschreibt ein Kühlsystem für ein Kraftfahrzeug mit zumindest einer Kühlmittelpumpe, wobei in den Kühlkreislauf ein Startgenerator und eine Leistungselektronik eingebunden ist. Die Kühlung der Leistungselektronik erfolgt dabei parallel zur Kühlung des Startgenerators.

Die Druckschrift DE 40 20 176 A1 beschreibt ein Stromaggregat zur Stromversorgung eines Kraftfahrzeuges, dessen Kühlkreislauf mit dem Kühlkreislauf des Kraftfahrzeuges verbunden ist.

Im Stromerzeugungsaggregat weisen die einzelnen Bauteile unterschiedliche Wärmeeinträge und verschiedene optimale Betriebstemperaturen auf.

Aufgabe der Erfindung ist es, eine bauteilgerechte bestmögliche Wärmeabfuhr für ein Stromerzeugungsaggregat der eingangs genannten Art zu erzielen.

Erfindungsgemäß wird dies dadurch erreicht, dass die elektroseitige Kühlkanalanordnung einen Kühlkanalanordnungsteil zur Kühlung einer Leistungselektronik und einen Kühlkanalanordnungsteil zur Kühlung der elektrischen Maschine aufweist, und dass der Kühlkanalanordnungsteil zur Kühlung der Leistungselektronik stromaufwärts des Kühlkanalanordnungsteils zur Kühlung der elektrischen Maschine im Kühlkreislauf des Kühlsystems angeordnet ist. Dies ermöglicht es, die relativ niedrige Betriebstemperaturen benötigende Leistungselektronik optimal zu temperieren.

In einer erfindungsgemäßen Ausbildung ist vorgesehen, dass stromabwärts zumindest einer Kühlkanalanordnung der Brennkraftmaschine ein Ölkühler im Kühlkreislauf des Kühlsystems angeordnet ist.

Somit werden alle Bauteile, welche eine niedrigere Betriebstemperatur als die Brennkraftmaschine aufweisen, vor der Brennkraftmaschine durch den kühlen Strang des Kühlsystems gekühlt. Die Leistungselektronik kann dabei in ein für die Brennkraftmaschine und die elektrische Maschine gemeinsam ausgebildetes Gehäuse integriert sein. Sämtliche Wechselstromführenden Teile können somit innerhalb des Gehäuses angeordnet werden. Dadurch kann Baugröße eingespart werden und die elektromagnetische Verträglichkeit erhöht werden.

Erfindungsgemäß ist weiters vorgesehen, dass eine vorzugsweise kennfeldgesteuerte elektrische Wasserpumpe im Kühlkreislauf des Kühlsystems außerhalb des Gehäuses angeordnet ist, wobei vorzugsweise die elektrische Wasserpumpe - zwischen der Vorder- und der Hinterachse des Fahrzeuges angeordnet ist, und das Gehäuse im Bereich der Vorder- oder Hinterachse positioniert ist. Es ist aber auch möglich, die elektrische Wasserpumpe im Motorraum anzuordnen.

Kreiskolbenbrennkraftmaschinen weisen - rund um die Achse der Exzenterwelle betrachtet - einen kalten Winkelsegmentbereich des Gehäuses im Einlassbereich und einen heißen Winkelsegmentbereich des Gehäuses im Verbrennungs- und Auslassbereich auf. Diese beiden Winkelsegmentbereiche weisen unterschiedlichen Wärmeeintrag und somit einen unterschiedlichen Kühlbedarf auf.

Zur Berücksichtigung von unterschiedlichen Wärmeeinträgen und Bauteiltemperaturen der elektrischen Maschine und der Brennkraftmaschine kann weiters im Rahmen der Erfindung vorgesehen sein, dass die elektroseitige Kühlkanalanordnung und eine erste kolbenseitige Kühlanordnung des ersten seitlichen Gehäuseteils zumindest teilweise parallel im Kühlkreislauf des Kühlsystems angeordnet sind, wobei vorzugsweise ein durch die elektroseitige Kühlkanalanordnung geleiteter und danach der ersten kolbenseitigen Kühlkanalanordnung zugeführter zweiter Kühlmittelstrom geringer ist, als ein im Wesentlichen direkt und unter zumindest überwiegender Umgehung der elektroseitigen Kühlkanalanordnung der ersten kolbenseitigen Kühlkanalanordnung zugeführter erster Kühlmittelstrom. Dabei kann sich der erste Kühlmittelstrom nach Durchströmen der Kühlkanäle in der ersten kolbenseitige Kühlkanalanordnung im heißen Winkelsegmentbereich der Brennkraftmaschine mit dem zweiten Kühlmittelstrom nach dessen Durchströmen der Kühlkanäle in der ersten kolbenseitige Kühlkanalanordnung und der zentralen Kühlkanalanordnung im kalten Winkelsegmentbereich im Bereich einer zweiten kolbenseitigen Kühlkanalanordnung des zweiten Gehäuseteils vereinigen. Simulationen haben gezeigt, dass eine besonders günstige Temperierung der einzelnen Bauteile erzielt werden kann, wenn der Volumenstrom des ersten Kühlmittelstromes etwa 70% bis 90%, vorzugsweise 80% bis 88%, des, vorzugsweise dem Gehäuse zugeführten und/oder aus der zweiten kolbenseitigen Kühlkanalanordnung des zweiten seitlichen Gehäuseteils abgeführten, gesamten Kühlmittelstromes beträgt. Dies ermöglicht eine exzessive Kühlung der heißen Winkelsegmentbereiche.

Die Erfindung wird im Folgenden anhand der Figuren näher erläutert. Es zeigen schematisch:
- Fig. 1: ein erfindungsgemäßes Stromerzeugungsaggregat in einem Längsschnitt;
- Fig. 2: ein Elektrofahrzeug mit einem erfindungsgemäßen Stromerzeugungsaggregat;
- Fig. 3: einen Kühlkreislauf eines nicht erfindungsgemäßen Stromerzeugungsaggregates in einer ersten Ausführungsvariante;
- Fig. 4: einen Kühlkreislauf in einer zweiten Ausführungsvariante;
- Fig. 5: einen Kühlkreislauf in einer dritten Ausführungsvariante;
- Fig. 6: einen Kühlkreislauf in einer vierten (nicht-erfindungsgemäßen) Ausführungsvariante;
- Fig. 7: einen Kühlkreislauf in einer fünfter (nicht-erfindungsgemäßen) Ausführungsvariante; und
- Fig. 8: einen Kühlkreislauf in einer sechsten Ausführungsvariante.

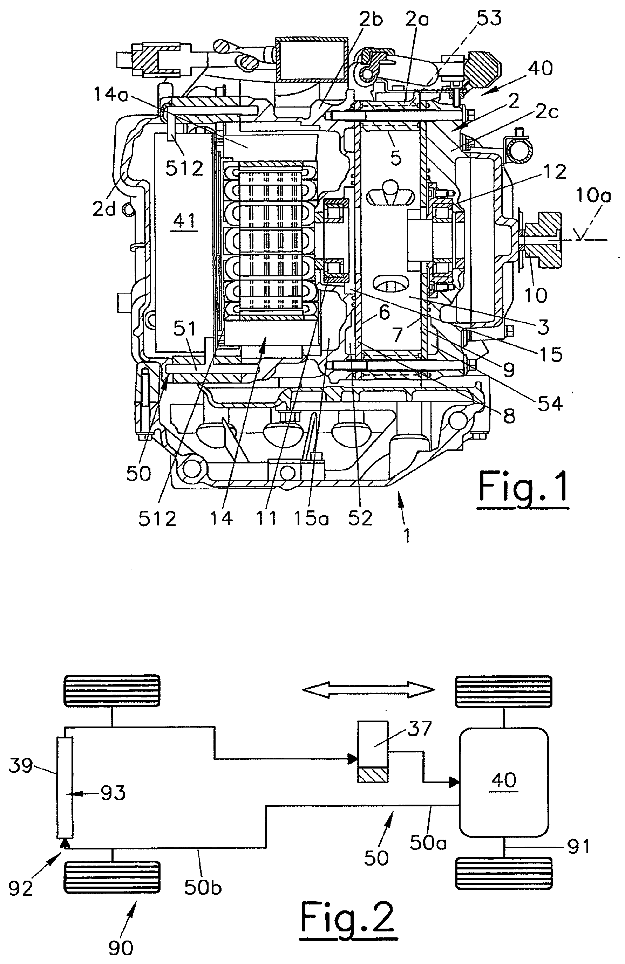

Die Fig. 1 zeigt eine Stromerzeugungseinrichtung 40 (Range Extender), insbesondere zur Reichweitenausdehnung eines Elektrofahrzeuges 90, wobei in einem Gehäuse 2 eine Kreiskolbenbrennkraftmaschine 1 und eine beispielsweise permanentmagneterregte elektrische Maschine 14 angeordnet ist. Das Gehäuse 2 weist eine Kammer 3 auf, in welchem ein Kreiskolben entlang einer trochoidenförmigen Lauffläche 5 des Gehäuses 2 umlaufend angeordnet ist. Die Kammer 3 wird dabei durch die trochoidenförmige Lauffläche 5 und durch seitliche Laufflächen 6, 7 gebildet. Das Gehäuse 2 weist einen die trochoidenförmige Lauffläche 5 ausbildenden zentralen Gehäuseteil 2a, einen seitlichen ersten Gehäuseteil 2b und einen seitlichen zweiten Gehäuseteil 2c auf. Weiters kann das Gehäuse 2 zwischen dem zentralen Gehäuseteil 2a und dem seitlichen Gehäuseteil 2b und/ oder dem seitlichen Gehäuseteil 2c eine die seitliche Lauffläche 6 bzw. 7 ausbildende erste bzw. zweite beidseitig ebene Seitenplatte 8, 9 aufweisen. Weiters kann optional zwischen dem Deckelteil 2d und dem die elektrische Maschine 14 aufnehmenden seitlichen ersten Gehäuseteil 2b ein Gehäusezwischenteil 2e zur Aufnahme einer Leistungselektronik 41 vorgesehen sein. Wenn die Leistungselektronik 41 außerhalb des Gehäuses 2 angeordnet oder in den Deckelteil 2d integriert wird, kann der Gehäusezwischenteil 2e entfallen. Es ist auch möglich die Leistungselektronik 41 in den ersten Gehäuseteil 2b zu integrieren.

Im ersten und zweiten Gehäuseteil 2b, 2c ist eine in einem inneren Gehäuseraum 15 angeordnete, durch den Kreiskolben 4 angetriebene Exzenterwelle 10 über beispielsweise als Wälzlager ausgebildete Lager 11, 12 drehbar gelagert. Wellengleich mit der Exzenterwelle 10 ist der Rotor 13 der im gleichen Gehäuse 2 angeordneten elektrischen Maschine 14 ausgebildet.

Der das erste Lager 11 aufnehmende seitliche erste Gehäuseteil 2b weist einen glockenartigen, zylindrischen Mantelbereich 2b' auf, welcher einen im Wesentlichen zylindrischen Innenraum 15a aufspannt, in dem der Rotor 13, sowie der Stator 14a der elektrischen Maschine 14 angeordnet ist. Der zylindrische Innenraum 15a wird durch einen an den Gehäuseteil 2b anschließenden Deckelteil 2d abgeschlossen.

Besonders vorteilhaft ist es, wenn die gesamte Leistungselektronik 41 der elektrischen Maschine 14 in den zylindrischen Innenraum 15a oder in den Deckelteil 2d integriert ist. Dadurch können alle Wechselstromleitungen innerhalb des Gehäuses 2 untergebracht werden, wodurch die elektromagnetische Verträglichkeit wesentlich gesteigert werden kann. Zum Stromerzeugungsaggregat 40 führen somit nur Gleichstromkabel - die Zahl der Anschlüsse kann somit auf ein Minimum reduziert werden.

Um eine Überhitzung der elektrischen Bauteile zu vermeiden und zur Abfuhr der bei der Verbrennung in der Kreiskolbenbrennkraftmaschine 1 entstehenden Wärme ist ein Kühlsystem 50 mit in den Gehäuseteilen 2d (Deckelteil), 2e (Gehäusezwischenteil), 2b (seitlicher erster Gehäuseteil), 2a (zentraler Gehäuseteil) und 2c (seitlicher zweiter Gehäuseteil) eingeformten Kühlkanalanordnungen 51, 52, 53, 54 vorgesehen, wobei die einzelnen Bauteile aus der Gruppe Leistungselektronik 41, elektrische Maschine 14 und ein - eventuell in die Ölwanne des Stromerzeugungsaggregates 40 integrierter - in Fig. 1 nicht weiter dargestellter - Ölkühler 35 nacheinander gekühlt werden. Dadurch ist es möglich, verschiedene bauteilspezifische Temperaturniveaus einzuhalten. Im in Fig. 1 dargestellten Ausführungsbeispiel werden die Teile des Gehäuses Deckelteil 2d, erster Gehäuseteil 2b, erste Seitenplatte 8, zentraler Gehäuseteil 2a, zweite Seitenplatte 9 und zweiter Gehäuseteil 2c nacheinander von Kühlmittel durchströmt. Der Kühlmitteleintritt in das Stromerzeugungsaggregat 40 ist dabei in Bereich des Deckelteiles 2d, des Gehäusezwischenteiles 2e oder des ersten Gehäuseteiles 2b, der Kühlmittelaustritt aus dem Stromerzeugungsaggregat 40 im Bereich des zweiten Gehäuseteiles 2c angeordnet.

Eine ringförmige Kühlkanalanordnung 51 um die elektrische Maschine 14 und die Leistungselektronik 41 kann dabei teilweise durch den ersten Gehäuseteil 2b und den Deckelteil 2d, eventuell auch durch den Gehäusezwischenteil 2e ausgebildet sein.

Die elektroseitige Kühlkanalanordnung 51 im ersten Gehäuseteil 2b (eventuell auch im Deckelteil 2d und Gehäusezwischenteil 2e) ist mit der kolbenseitigen ersten Kühlmittelanordnung 52 im seitlichen ersten Gehäuseteil 2b, der zentralen Kühlmittelanordnung 53 im zentralen Gehäuseteil 2a und der kolbenseitigen zweiten Kühlmittelanordnung 54 im seitlichen zweiten Gehäuseteil 2c ohne externe Leitungen und direkt innerhalb des Gehäuses 2 strömungsverbunden.

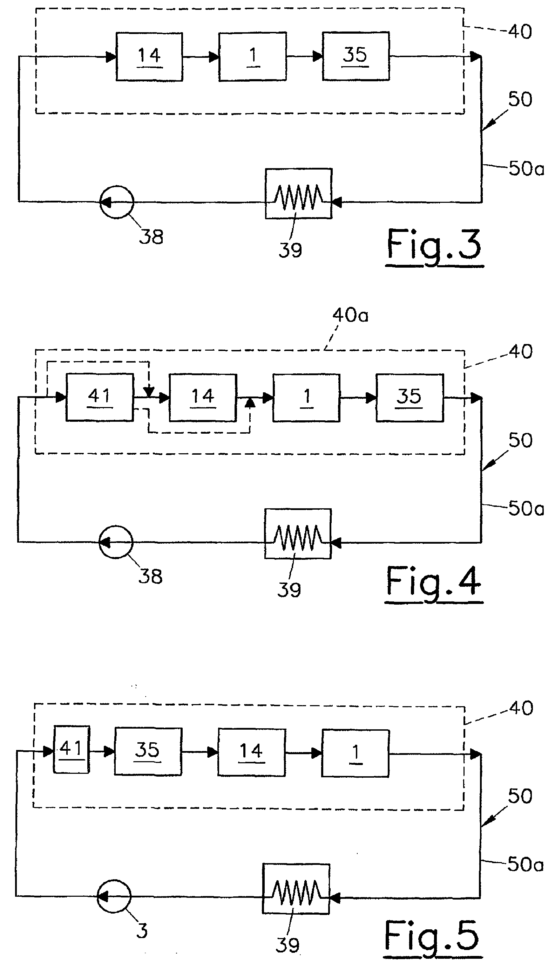

Fig. 3 zeigt eine nicht-erfindungsgemäße Ausfuhrungsvariante, wobei im von einer Kühlflüssigkeit durchströmten Kühlkreislauf 50a des Kühlsystems 50 im Stromerzeugungsaggregat 40 nacheinander die Kühlkanalanordnungen 51, 52, 53, 54 der elektrischen Maschine 14, der Kreiskolbenbrennkraftmaschine 1 und des Ölkühlers 35 durchströmt werden. Die aus dem Stromerzeugungsaggregat austretende heiße Kühlflüssigkeit wird über den Fahrzeugkühler 36 und die vorteilhafterweise kennfeldgesteuerte elektrische Wasserpumpe 37 wieder dem Stromerzeugungsaggregat 40 zurückgeführt.

Das in Fig. 4 dargestellte Kühlsystem 50 unterscheidet sich von Fig. 3 dadurch, dass vor oder gleichzeitig mit der elektrischen Maschine 14 auch die erfindungsgemäß vorhandene Leistungselektronik 41 gekühlt wird. Die elektroseitige Kühlkanalanordnung 51 weist dabei eine Kühlkanalanordnung 511 zur Kühlung der Leistungselektronik 41 und eine Kühlkanalanordnung 512 zur Kühlung der elektrischen Maschine 14 auf. Wie durch strichlierte Linien in Fig. 4 angedeutet ist, können die Kühlkanalanordnungsteile 511 zur Kühlung der Leistungselektronik 41 und 512 zur Kühlung der elektrischen Maschine 512 zumindest teilweise parallel durchströmt werden.

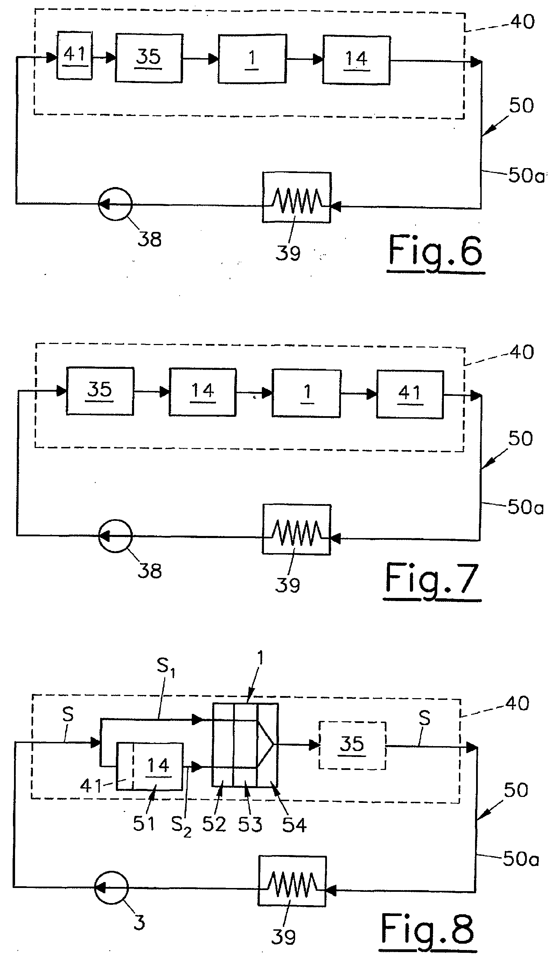

In Abwandlung der in Fig. 3 bzw. Fig. 4 gezeigten Ausbildung kann der Ölkühler 35 im Kühlkreislauf 50a auch stromaufwärts der elektrischen Maschine 14 angeordnet sein, wie in Fig. 5 dargestellt ist. Dabei ist es auch möglich, dass die Kreiskolbenbrennkraftmaschine 1 stromaufwärts der elektrischen Maschine 14 positioniert wird (Fig. 6). Die Leistungselektronik kann dabei vorteilhafterweise stromaufwärts des Ölkühlers angeordnet sein.

Wie in Fig. 2 gezeigt ist, kann das Stromerzeugungsaggregat 40 im Bereich der Hinterachse 91 des Elektrofahrzeuges 90 angeordnet werden, wobei der Kühlkreislauf 50a an den für die Kühlung der elektrischen Antriebsmotoren vorgesehenen Kühlkreislauf 50b des Fahrzeugkühlsystem 92 angeschlossen werden kann. Die Kühlung des Kühlmediums des gemeinsamen Kühlsystems 50 erfolgt dabei über den Fahrzeugkühler 39. Aus Gewichts- und Bauraumgründen kann die elektrische Wasserpumpe 38 entfernt vom Stromerzeugungsaggregat 40 - in Fahrtrichtung des Elektrofahrzeuges 90 betrachtet - vor der Hinterachse 91 angeordnet werden. Dies ermöglicht es, sowohl die spezifischen Anforderungen an die elektrische Wasserpumpe 38 zu erfüllen, und gleichzeitig die Gewichtsverteilung im Fahrzeug 90 positiv zu beeinflussen.

Fig. 8 zeigt eine Ausführungsvariante, bei der die elektrische Maschine 14 und die Kreiskolbenbrennkraftmaschine 1 hintereinander im Kühlkreislauf 50a des Kühlsystems 50 angeordnet sind, wobei ein erster Kühlmittelstrom S₁, welcher etwa 70% bis 90% des gesamten in das Stromaggregat 40 eintretenden bzw. austretenden Volumenstromes S des Kühlkreislaufes 50a aufweist, zumindest überwiegend an der elektroseitigen Kühlkanalanordnung 51 der elektrischen Maschine 14 und eventuell auch einer Leistungselektronik 41 vorbeigelenkt wird. Ein zweiter Kühlmittelstrom S₂ mit nur etwa 10% bis 30% des gesamten Volumenstromes S durchströmt die elektroseitige Kühlkanalanordnung 51. Die beiden Kühlmittelströme S₁ und S₂ durchströmen auf getrennten Kühlkanälen die erste kolbenseitige Kühlkanalanordnung 52 und die zentrale Kühlkanalanordnung 53 und vereinigen sich im Bereich der zweiten kolbenseitigen Kühlkanalanordnung 54 zu einem gemeinsamen Volumenstrom S, welcher eventuell stromabwärts der Kreiskolbenbrennkraftmaschine 1 durch einen Ölkühler 35 geführt wird.

## Patentansprüche

1. Stromerzeugungsaggregat (40) zur Reichweitenausdehnung eines Elektrofahrzeuges (90), mit einer insbesondere durch eine Kreiskolbenbrennkraftmaschine (1) gebildeten Brennkraftmaschine und zumindest einer wellengleich mit der Brennkraftmaschine angeordneten - vorzugsweise permanentmagneterregten - elektrischen Maschine (14), wobei Brennkraftmaschine und elektrische Maschine (14) als Einheit ausgebildet sind und ein gemeinsames Gehäuse (2), sowie ein gemeinsames Kühlsystem (50) aufweisen, wobei zumindest eine elektroseitige Kühlkanalanordnung (51) zur Kühlung einer elektrischen Komponente im Kühlkreislauf (50a) des Kühlsystems (50) stromaufwärts zumindest einer Kühlkanalanordnung (52, 53, 54) der Brennkraftmaschine angeordnet ist, wobei die elektroseitige Kühlkanalanordnung (51) einen Kühlkanalanordnungsteil (511) zur Kühlung einer Leistungselektronik (41) und einen Künlkanalanordnungsteil (512) zur Kühlung der elektrischen Maschine (14) aufweist, **dadurch gekennzeichnet dass** der Kühlkanalanordnungsteil (511) zur Kühlung der Leistungselektronik (41) stromaufwärts des Kühlkanalanordnungsteils (512) zur Kühlung der elektrischen Maschine (14) im Kühlkreislauf (50a) des Kühlsystems (50) angeordnet ist, dass die elektroseitige Kühlkanalanordnung (51) und eine erste kolbenseitige Kühlkanalanordnung (52) zumindest teilweise parallel im Kühlkreislauf (50a) des Kühlsystems (50) angeordnet sind, und dass im von einer Kühlflüssigkeit durchströmten Kühlkreislauf (50a) des Kühlsystems (50) eine elektrische Wasserpumpe (38) außerhalb des Gehäuses (2) angeordnet ist.

2. Stromerzeugungsaggregat (40) nach Anspruch 1, **dadurch gekennzeichnet, dass** im Kühlkreislauf (50a) des Kühlsystems (50) stromaufwärts der Brennkraftmaschine ein Ölkühler (35) angeordnet ist

3. Stromerzeugungsaggregat (40) nach Anspruch 1 oder 2, **dadurch gekennzeichnet, dass** stromabwärts zumindest einer Kühlkanalanordnung (52, 53, 54) der Brennkraftmaschine der Ölkühler (35) im Kühlkreislauf (50a) des Kühlsystems (50) angeordnet ist.

4. Stromerzeugungsaggregat (40) nach einem der Ansprüche 1 bis 3, **dadurch gekennzeichnet, dass** stromaufwärts zumindest einer elektroseitige Kühlkanalanordnung (51), vorzugsweise zur Kühlung der elektrischen Maschine (14) ein Ölkühler (35) im Kühlkreislauf (50a) des Kühlsystems (50) angeordnet ist.

5. Stromerzeugungsaggregat (40) nach einem der Ansprüche 1 bis 4, **dadurch gekennzeichnet, dass** die Leistungselektronik (41) in das für die Brennkraftmaschine und die elektrische Maschine (14) gemeinsam ausgebildetes Gehäuse (2) integriert ist.

6. Stromerzeugungsaggregat (40) nach einem der Ansprüche 1 bis 5, **dadurch gekennzeichnet, dass** der Kühlkreislauf (50a) des Kühlsystems (50) mit einem Fahrzeugkühlsystem (92) zur Kühlung eines elektrischen Antriebssystems strömungsverbunden ist, wobei die elektrische Wasserpumpe (37) stromaufwärts des Gehäuses (2) und stromabwärts eines durch einen Fahrzeugkühler (93) gebildeten Luft/Wasser-Wärmetauschers (39) angeordnet ist.

7. Stromerzeugungsaggregat (40) nach einem der Ansprüche 1 bis 6, **dadurch gekennzeichnet, dass** die Kühlkanalanordnungen (51, 511, 512, 52, 53, 54) zur Kühlung der elektrischen Komponenten und der Brennkraftmaschine im Gehäuse (2) angeordnet sind.

8. Stromerzeugungsaggregat (40) nach einem der Ansprüche 1 bis 7, **dadurch gekennzeichnet, dass** die Kühlkanalanordnungen (51, 511, 512, 52, 53, 54) zur Kühlung der elektrischen Komponenten und der Brennkraftmaschine leitungslos miteinander direkt innerhalb des Gehäuses (2) strömungsverbunden sind.

9. Stromerzeugungsaggregat (40) nach zumindest einem der Ansprüche 1 bis 8, mit einer Kreiskolbenbrennkraftmaschine (1), **dadurch gekennzeichnet, dass** ein durch die elektroseitige Kühlkanalanordnung (51) geleiteter und danach der ersten kolbenseitigen Kühlkanalanordnung (52) zugeführter zweiter Kühlmittelstrom geringer ist, als ein im Wesentlichen direkt und unter zumindest überwiegender Umgehung der elektroseitigen Kühlkanalanordnung (51) der ersten kolbenseitigen Kühlkanalanordnung (52) zugeführter erster Kühlmittelstrom.

10. Stromerzeugungsaggregat (40) nach Anspruch 9, **dadurch gekennzeichnet, dass** sich der erste Kühlmittelstrom nach Durchströmen von Kühlkanälen in der ersten kolbenseitige Kühlkanalanordnung (52) und der zentralen Kühlkanalanordnung (53) in einem heißen Winkelsegmentbereich (H) mit dem zweiten Kühlmittelstrom nach dessen Durchströmen von Kühlkanälen in der ersten kolbenseitige Kühlkanalanordnung (52) und der zentralen Kühlkanalanordnung (53) im kalten Winkelsegmentbereich (C) im Bereich einer zweiten kolbenseitigen Kühlkanalanordnung (54) des zweiten Gehäuseteils (2c) vereinigt.

11. Stromerzeugungsaggregat (40) nach Anspruch 9 oder 10, **dadurch gekennzeichnet, dass** der Volumenstrom des ersten Kühlmittelstromes etwa 70% bis 90%, vorzugsweise 80% bis 88%, des, vorzugsweise dem Gehäuse (2) zugeführten und/oder aus der zweiten kolbenseitigen Kühlkanalanordnung (54) des zweiten seitlichen Gehäuseteils (2c) abgeführten, gesamten Kühlmittelstromes beträgt.

## Claims

1. A current generating unit (40) for extending the range of an electric vehicle (90), comprising an internal combustion engine especially formed by a rotary-piston engine (1), and at least one electric machine (14) preferably excited by permanent magnets and arranged coaxially to the internal combustion engine, with the internal combustion engine and the electric machine (14) being arranged as a unit and comprising a common housing (2) and a common cooling system (50), with at least one cooling channel arrangement (51) disposed on the electric side being arranged for cooling an electric component in the cooling circuit (50a) of the cooling system (50) upstream of at least one cooling channel arrangement (52, 53, 54) of the internal combustion engine, with the cooling channel arrangement (51) disposed on the electric side comprising a cooling channel arrangement part (511) for cooling power electronics (41) and a cooling channel arrangement part (512) for cooling the electric machine (14), **characterised in that** the cooling channel arrangement part (511) for cooling the power electronics (41) is arranged upstream of the cooling channel arrangement part (512) for cooling the electric machine (14) in the cooling circuit (50a) of the cooling system (50), the cooling channel arrangement (51) disposed on the electric side and a first cooling channel arrangement (52) disposed on the piston side are arranged at least partly in parallel in the cooling circuit (50a) of the cooling system (50), and an electric water pump (38) is arranged outside of the housing (2) in the cooling circuit (50a) of the cooling system (50), through which a cooling liquid flows.

2. A current generating unit (40) according to claim 1, **characterised in that** an oil cooler (35) is arranged in the cooling circuit (50a) of the cooling system (50) upstream of the internal combustion engine.

3. A current generating unit (40) according to claim 1 or 2, **characterised in that** the oil cooler (35) is arranged in the cooling circuit (50a) of the cooling system (50) downstream of at least one cooling channel arrangement (52, 53, 54) of the internal combustion engine.

4. A current generating unit (40) according to one of the claims 1 to 3, **characterised in that** an oil cooler (35) is arranged in the cooling circuit (50a) of the cooling system (50) upstream of at least one cooling channel arrangement (51) disposed on the electric side, preferably for cooling the electric machine (14).

5. A current generating unit (40) according to one of the claims 1 to 4, **characterised in that** the power electronics (41) is arranged in the housing (2) jointly formed for the internal combustion engine and the electric machine (14).

6. A current generating unit (40) according to one of the claims 1 to 5, **characterised in that** the cooling circuit (50a) of the cooling system (50) is flow-connected to a vehicle cooling system (92) for cooling an electric drive system, with the electric water pump (37) being arranged upstream of the housing (2) and downstream of an air/water heat exchanger (39) formed by a vehicle radiator (93).

7. A current generating unit (40) according to one of the claims 1 to 6, **characterised in that** the cooling channel arrangements (51, 511, 512, 52, 53, 54) for cooling the electric components and the internal combustion engine are arranged in the housing (2).

8. A current generating unit (40) according to one of the claims 1 to 7, **characterised in that** the cooling channel arrangements (51, 511, 512, 52, 53, 54) for cooling the electric components and the internal combustion engine are flow-connected without conduits to each other directly within the housing (2).

9. A current generating unit (40) according to at least one of the claims 1 to 8, comprising a rotary-piston combustion engine (1), **characterised in that** a second coolant flow, which is guided through the cooling channel arrangement (51) disposed on the electric side and thereafter the first cooling channel arrangement (52) on the piston side, is lower than a first coolant flow supplied to the first cooling channel arrangement (52) on the piston side in a substantially direct way and by mostly circumventing the cooling channel arrangement (51) on the electric side.

10. A current generating unit (40) according to claim 9, **characterised in that** after flowing through the cooling channels in the first cooling channel arrangement (52) on the piston side and the central cooling channel arrangement (53) in a hot angular segment region (H) the first coolant flow will merge with the second coolant flow in the region of a second cooling channel arrangement (54) on the piston side of the second housing part (2c) after said second flow has flowed through cooling channels in the first cooling channel arrangement (52) on the piston side and the central cooling channel arrangement (53) in the cold angular segment region (C).

11. A current generating unit (40) according to claim 9 or 10, **characterised in that** the volume flow of the first coolant flow is approximately 70% to 90%, preferably 80% to 88%, of the entire coolant flow which is preferably supplied to the housing (2) and/or which is discharged from the second cooling channel arrangement (54) on the piston side of the second lateral housing part (2c).

## Revendications

1. Ensemble de production d'électricité (40) pour permettre l'extension de la portée d'un véhicule électrique (90) comprenant un moteur à combustion interne en particulier constitué par un moteur à combustion interne à pistons rotatifs (1) et au moins un moteur électrique (14) monté sur le même arbre que le moteur à combustion interne, - de préférence excité par aimant permanent, le moteur à combustion interne et le moteur électrique (14) étant réalisés sous la forme d'un ensemble unitaire et comprenant un carter (2) commun ainsi qu'un système de refroidissement (50) commun, au moins un dispositif de canal de refroidissement (51) situé côté moteur électrique pour permettre de refroidir un composant électrique étant monté dans le circuit de refroidissement (50a) du système de refroidissement (50) en amont d'au moins un dispositif de canal de refroidissement (52, 53, 54) du moteur à combustion interne, le dispositif de canal de refroidissement (51) situé côté moteur électrique comprenant une partie de dispositif de canal de refroidissement (511) pour permettre de refroidir une électronique de puissance (41) et une partie de dispositif de canal de refroidissement (512) pour permettre de refroidir le moteur électrique (14),
**caractérisé en ce que**
la partie de dispositif de canal de refroidissement (511) pour permettre de refroidir l'électronique de puissance (41) est montée en amont de la partie de dispositif de canal de refroidissement (512) pour refroidir le moteur électrique (14) dans le circuit de refroidissement (50a) du système de refroidissement (50), le dispositif de canal de refroidissement (51) situé côté moteur électrique et un premier dispositif de canal de refroidissement (52) situé côté pistons sont montés au moins partiellement en parallèle dans le circuit de refroidissement (50a) du système de refroidissement (50), et, dans le circuit de refroidissement (50a) du système de refroidissement (50) parcouru par un fluide de refroidissement, est montée une pompe à eau électrique (38) à l'extérieur du carter (2).

2. Ensemble de production d'électricité (40) conforme à la revendication 1,
**caractérisé en ce que**
dans le circuit de refroidissement (50a) du système de refroidissement (50), est monté un refroidisseur d'huile (35) en amont du moteur à combustion interne.

3. Ensemble de production d'électricité (40) conforme à la revendication 1 ou 2,
**caractérisé en ce que**
le refroidisseur d'huile (35) est monté dans le circuit de refroidissement (50a) du système de refroidissement (50), en aval d'au moins un dispositif de canal de refroidissement (52, 53, 54) du moteur à combustion interne.

4. Ensemble de production d'électricité (40) conforme à l'une des revendications 1 à 3,
**caractérisé en ce qu'**
un refroidisseur d'huile (35) est monté dans le circuit de refroidissement (50a) du système de refroidissement (50) en amont d'au moins un dispositif de canal de refroidissement (51) côté électrique, de préférence pour refroidir la machine électrique (14).

5. Ensemble de production d'électricité (40) conforme à l'une des revendications 1 à 4,
**caractérisé en ce que**
l'électronique de puissance (41) est intégrée dans le boîtier (2) réalisé en commun pour le moteur à combustion interne et le moteur électrique (14).

6. Ensemble de production d'électricité (40) conforme à l'une des revendications 1 à 5,
**caractérisé en ce que**
le circuit de refroidissement (50a) du système de refroidissement (50) est relié de manière électriquement conductrice à un système de refroidissement du véhicule (92) pour refroidir un système d'entraînement électrique, la pompe à eau électrique (37) étant montée en amont du carter (2) et en aval d'un échangeur de chaleur air/eau (39) formé par un refroidisseur du véhicule (93).

7. Ensemble de production d'électricité (40) conforme à l'une des revendications 1 à 6,
**caractérisé en ce que**
les dispositifs de canal de refroidissement (51, 511, 512, 52, 53, 54) sont montés dans le carter (2) pour refroidir les composants électriques et le moteur à combustion interné.

8. Ensemble de production d'électricité (40) conforme à l'une des revendications 1 à 7,
**caractérisé en ce que**
les dispositifs de canal de refroidissement (51, 511, 512, 52, 53, 54) sont reliés directement sans fil à l'intérieur du carter (2) de façon électriquement conductrice pour permettre de refroidir les composants électriques et le moteur à combustion interne.

9. Ensemble de production d'électricité (40) conforme à au moins l'une des revendications 1 à 8, comprenant un moteur à combustion interne (1) à pistons rotatifs,
**caractérisé en ce qu'**
un second flux d'agent de refroidissement passant dans le dispositif de canal de refroidissement (51) côté moteur électrique puis transféré vers le premier dispositif de canal de refroidissement (52) côté pistons est inférieur à un premier flux d'agent de refroidissement transféré essentiellement directement et en contournant au moins principalement le dispositif de canal de refroidissement (51) situé côté moteur électrique du premier dispositif de canal de refroidissement (52) situé côté pistons.

10. Ensemble de production d'électricité (40) conforme à la revendication 9,
**caractérisé en ce que**
le premier flux d'agent de refroidissement après être passé dans des canaux de refroidissement dans le premier dispositif de canal de refroidissement (52) situé côté pistons et le dispositif de canal de refroidissement central (53) dans un domaine de segment angulaire chaud (H) se combine au second flux d'agent de refroidissement après qu'il soit passé dans des canaux de refroidissement dans le premier dispositif de canal de refroidissement (52) situé côté pistons et le dispositif de canal de refroidissement central (53) dans un domaine de segment angulaire froid (C), dans la zone d'un second dispositif de canal de refroidissement (54) situé côté pistons de la seconde partie de carter (2c).

11. Ensemble de production d'électricité (40) conforme à la revendication 9 ou 10,
**caractérisé en ce que**
le débit du premier flux d'agent de refroidissement est égal à environ 70% à 90%, de préférence à 80% à 88% du débit total d'agent de refroidissement fourni de préférence au carter (2) et/ou extrait du second dispositif de canal de refroidissement (54) situé côté pistons de la seconde partie de boîtier latérale (2c).
